# EUROPEAN PATENT APPLICATION

(11) **EP 4 662 993 A1**
(43) Date of publication of application: **17.12.2025**
(21) Application number: 25181677.3
(22) Date of filing: 10.06.2025
(51) Int. Cl.: A01B 69/00, A01B 79/00, A01D 41/127

(54) **COOPERATIVE MONITORING SYSTEMS FOR AGRICULTURAL IMPLEMENTS AND METHODS FOR SAME**

(30) Priority: 10.06.2024 US 202463658236 P
(71) Applicant: Raven Industries, Inc., Sioux Falls, South Dakota 57104 (US)
(72) Inventor: FRIEDRICK, Joshua James Dalbert, Yorkton, Saskatchewan, S3N 1J1 (CA); WAGERS, Jesse Lee, Harrisburg, South Dakota, 57032 (US)
(74) Representative: Pfenning, Meinig & Partner mbB

(57) **Abstract**

The present disclosure relates to a system configured to enhance the monitoring and control of agricultural equipment, particularly when different tools or implements are attached to an agricultural vehicle such as a tractor. In examples, this system is equipped with sensors that detect changes in the equipment's configuration, such as when implements are swapped or adjusted. Upon recognizing these changes, the system selects an appropriate sensor profile to effectively monitor the tool and the environment surrounding the agricultural vehicle and the agricultural implement. Monitoring the agricultural system allows for real-time adjustments to the vehicle's steering and operational functions, ensuring optimal performance. Additionally, the system alerts the operator if manual intervention is needed and autonomously adapt to new configurations, which may include compensating for wear or misalignment of the implements, according to examples.

## Description

### CLAIM OF PRIORITY

This patent application claims the benefit of priority, under 35 U.S.C. Section 119(e), to Joshua James Dalbert Fredrick U.S. Patent Application Serial Number 63/658,236, entitled "COOPERATIVE MONITORING SYSTEMS FOR AGRICULTURAL IMPLEMENTS AND METHODS FOR THE SAME," filed on June 10, 2024, (Attorney Docket No. 2754.558PRV), which is hereby incorporated by reference herein in its entirety.

### COPYRIGHT NOTICE

A portion of the disclosure of this patent document contains material that is subject to copyright protection. The copyright owner has no objection to the facsimile reproduction by anyone of the patent document or the patent disclosure, as it appears in the Patent and Trademark Office patent files or records, but otherwise reserves all copyright rights whatsoever. The following notice applies to the software and data as described below and in the drawings that form a part of this document: Copyright Raven Industries, Inc. of Sioux Falls, South Dakota, USA. All Rights Reserved.

### TECHNICAL FIELD

Examples described herein generally relate to the control of on or more of agricultural vehicles, agricultural implements, or agricultural assemblies.

### BACKGROUND

In some examples, vehicle perception systems monitor an agricultural assembly, such as agricultural vehicles and implements, with a fixed configuration (e.g., the vehicle perception systems do not adapt to changes in the agricultural vehicles or the agricultural assemblies). The vehicle perception systems include sensors to detect operations and environmental factors around the agricultural assembly. A controller associated with the perception system receives signals from the sensors and provides control of one or more agricultural operations based on information from the sensors as an input. These sensors and controllers are tasked to detect specified characteristics, such as obstacles.

### OVERVIEW

Present vehicle perception systems have multiple problems that are addressed by the present disclosure. Agricultural vehicles and implements, in various examples, include their own sensors, actuators, and controllers that use input from the sensors to generate instructions for the actuators to provide alerts to an operator. These existing sensors are tasked by their controller to monitor for obstacles around (e.g., in the path) the agricultural assembly (e.g., one or more of the agricultural vehicles or implements) based on the architecture/coding provided by the developer. In some examples, controllers and sensors included with agricultural assemblies are configured to ignore features, such as the implement or vehicle, to decrease false positive detection of obstacles. Accordingly, the sensors and associated controllers are effectively ignorant to monitor other, non-tasked features, such as, but not limited to, terrain, vehicles or implements (or portions of the same), or the like for other purposes that the sensors are otherwise suitable to handle. In a human example, these systems are like a human having eyes, ears, fingers, smell, etc., that are only each keyed to look for blue, birdcalls, roughness, and an ammonia smell, respectively, while failing to look for or have a controller that recognizes the color red, alarm bells, slippery surfaces, the smell of baked bread, respectively. The present disclosure provides a controller that effectively provides a replacement or supplemental assignments or tasking for the sensors, interprets this additional input from sensors, and provides enhanced control of the agricultural vehicle or the agricultural implement by using existing actuators that were not previously available in the initial state of the agricultural assembly.

In other words, the present disclosure adds a controller that interfaces with existing sensors and actuators to provide enhanced functionality for the vehicle, implement, or both. This symbiotic relationship enhances the operation of the agricultural assembly (e.g., either of the vehicle, implement, or both) using existing capabilities to control the agricultural assembly.

### BRIEF DESCRIPTION OF THE DRAWINGS

Various examples are illustrated in the figures of the accompanying drawings. Such examples are demonstrative and not intended to be exhaustive or exclusive examples of the present subject matter.
FIG. 1 is a perspective view of an example agricultural assembly conducting an agricultural operation.
FIG. 2 is a schematic view of an example of a refinement controller.
FIG. 3 is a schematic view of another example of a refinement controller.
FIG. 4 illustrates a block diagram of one example of a method of cooperative monitoring systems for agricultural implements.
FIG. 5 is a perspective view of an example agricultural assembly including an example implement.
FIG. 6 is a perspective view of another example agricultural assembly including another example implement.
FIG. 7 is a perspective view of an additional example agricultural assembly including an additional example implement.
FIG. 8 is a perspective view of an additional example agricultural assembly including an additional example implement.
FIG. 9 is a perspective view of an additional example agricultural assembly including an additional example implement.
FIG. 10 is a perspective view of an additional example agricultural assembly including an additional example implement.
FIG. 11 is a block diagram illustrating one example of a machine upon which one or more of the examples herein may be implemented.

### DETAILED DESCRIPTION

The present disclosure relates to an agricultural assembly that includes an agricultural vehicle (e.g., prime mover, tractor, combine, harvester, or the like) including an agricultural implement. The agricultural assembly is configured to execute agricultural operations. In examples, the agricultural vehicle is equipped at production with one or more systems configured to manage both steering and operational functions. Additionally, the vehicle includes various actuators at production that control different components within the assembly and sensors (also at production) that produce data reflecting the performance of one or more components of the agricultural system, according to one or more examples of the present disclosure. In examples, one or more agricultural implements are attached to the vehicle to support farming activities.

The systems described herein also incorporate a controller refinement system having a processor with processing circuitry and associated memory. This memory stores instructions that, upon execution, empower the processor to recognize alterations in the configuration of the agricultural assembly, such as changes to the attached agricultural implement, by evaluating the data from the sensors. Upon identifying a change in the configuration of the agricultural assembly, the system selects a sensor profile to oversee the agricultural implement and the operating environment for the assembly, according to one or more non-limiting examples.

In examples, the controller refinement processor is capable of choosing the sensor profile from a collection of predefined profiles, each linked to a distinct type of agricultural implement. In some examples, the processor also initiates a calibration process for the sensors when a configuration change is identified (e.g., different implement is connected, an implement is reconfigured or the like). The sensors, in combination with the controller, ascertain various conditions of the agricultural implement, including its connectivity to the agricultural vehicle, functionality, wear, or damage, according to some examples. If a configuration change necessitates the intervention of the operator is detected, the system, according to some examples, will transmit an alert to an operator interface. Moreover, the system is adapted, in some examples, to autonomously modify the steering and propulsion parameters in reaction to a new agricultural implement configuration and manage the new agricultural implement to counteract wear, damage, or misalignment while operating the new implement.

In some examples, the system modifies the vehicle's navigation plan based on alterations to the agricultural implement and provides predictive maintenance notifications by analyzing operational data. In examples, the system identifies unintentional detachment of the agricultural implement and communicates with a fleet management system to provide status updates and accept operational instructions (e.g., to autonomously reattach the implement or request operator assistance). The controller refinement system itself includes an agricultural assembly interface for communication with the agricultural assembly and, in some non-limiting examples, has a sensor interface for connecting with one or more existing sensors of the agricultural assembly (e.g., either or both of the agricultural vehicle or implement).

In examples, a machine learning component is included to collaborate with the processor to create training attributes, aiding in the determination of the new setup by comparing changes in sensor data to these attributes. The system detects a range of changes, such as the removal or addition of agricultural implements, replacement of one implement with another, or issues of wear and misalignment, in one or more examples. The processor is integrated into the agricultural assembly and is programmed to monitor the agricultural implement's condition, functionality, and errors (e.g., through comparison of sensor data to training attributes).

In examples, the system includes an actuator interface for interconnection of the refinement controller with position actuators that adjust the position and operation actuators of the agricultural implement to regulate the operation speed, operation conduct, or the like. The system dispatches control signals to these actuators to control (maintain, change, increase, decrease, or the like) the position, operation, speed, or the like of the agricultural implement for instance, according to sensor data, in some examples. In some examples, the actuators described herein include but are not limited to, power take-off (PTO) units, control valves, three-point linkages, three-bar linkages, or the like. The operation actuators described herein include, but are not limited to, steering systems, motors, hydraulic actuators, electrical actuators, electromotive actuators, pneumatic actuators, fans, or the like.

The present disclosure also includes example methods for cooperative monitoring of agricultural implements involving detecting changes in an implement setup through sensor observations and selecting a sensor profile based on the observations to oversee the agricultural implement, the proximate environment, and the operation of the implement in the environment. These methods include comparing sensor data changes to training attributes generated by machine learning and configuring the controller to oversee the condition of the agricultural implement, implement functionality, and implement operation errors. In examples, the method also includes sending control signals to actuators to control one or more of the agricultural implement position, operation, or speed in response to detected changes.

The above discussion is intended to provide an overview of the subject matter of the present disclosure. It is not intended to provide an exclusive or exhaustive explanation of the invention. The description below is included to provide further information about the present disclosure.

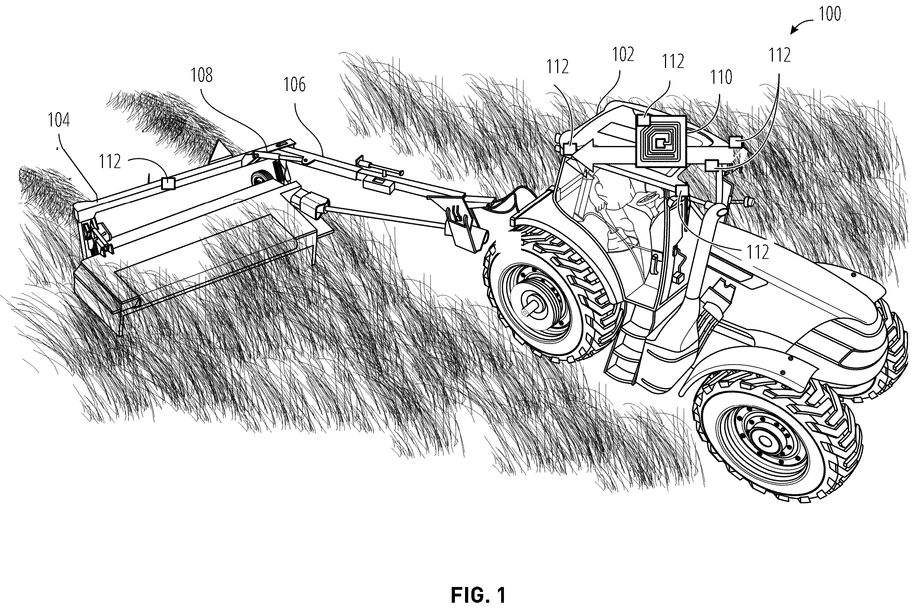

FIG. 1 is an illustration of an agricultural assembly 100 conducting an agricultural operation, in this example, mowing, swathing, reaping, or the like. The agricultural assembly 100 includes an agricultural vehicle 102 (e.g., a tractor, combine, harvester, or the like) coupled with an agricultural implement 104 (e.g., a mower, swather, seeder, planter, rake, tiller, cultivator, or the like).

The agricultural assembly 100 includes one or more implement actuators 108 that control associated functions of the agricultural mower implement 104, in examples. One example of an implement actuator 108 includes an arm actuator. In the present example, the arm actuator includes one or more hydraulic cylinders or the like, that position the agricultural implement 104 relative to the agricultural vehicle 102, crop or the like. Other example implement actuators 108 include, but are not limited to, height actuators (e.g., for a sickle height actuator, a reel height actuator, or the like) for controlling cutting height; and motors that drive the implement tools such as sickles, cutting bars, the reel, or the like. In other examples, the implement actuators 108 include, but are not limited to, actuators to control boom height, gang, coulter depth, or planting depth; and control valves, modulating nozzles, belts, augers, or the like.

In operation, an operator for the agricultural assembly 100 having the agricultural implement 104 observes forthcoming crops, such as an edge of a crop row, and manually steers the agricultural vehicle 102 to align the connected agricultural implement 104 (e.g., an end of the implement) with the edge of the crop row. The operator continues this observation and manual steering to maintain alignment while conducting the agricultural operation.

Components of the agricultural vehicle 102 and the agricultural implement 104, such as, one or more vision sensors 110 or sensors 112 are included to detect an environment around one or more of the agricultural vehicle 102 or the agricultural implement 104. The sensors (e.g., vision sensors 110 and sensors 112) detect various characteristics of one or more of the environment, the agricultural vehicle 102, or the agricultural implement 104, in examples. For instance, the monitored characteristics include but are not limited to, a position of the agricultural implement 104 relative to the agricultural vehicle 102, a position of the agricultural implement 104 relative to the farming environment proximate to the agricultural assembly 100, characteristics of the farming environment (e.g., crops, terrain, obstacles, or the like), or other information for automating agricultural processes, or the like.

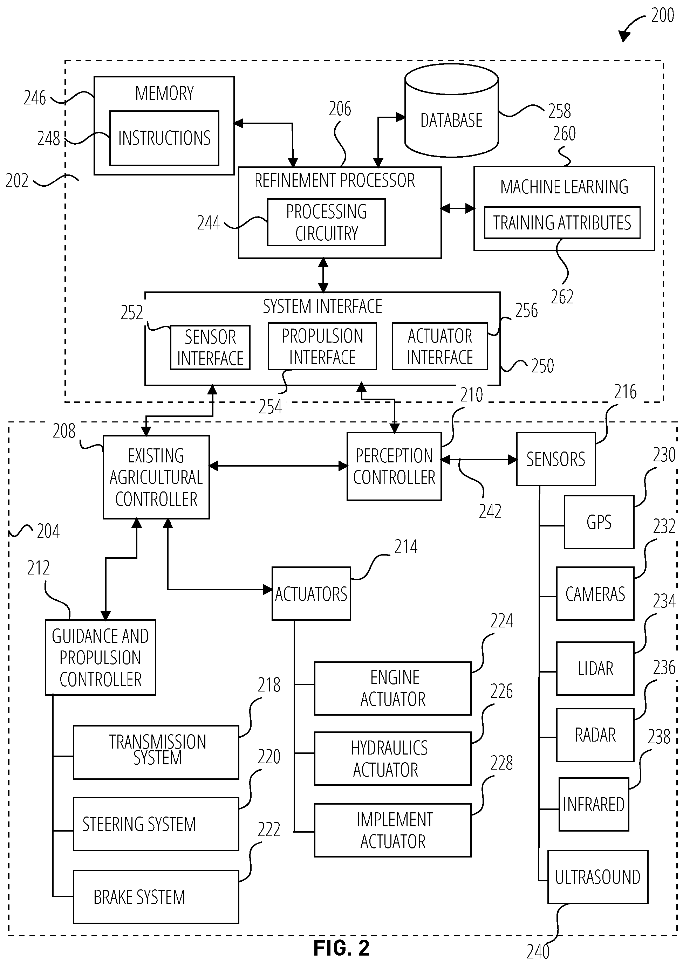

In examples, the vision sensors 110 and the sensors 112 are in communication with a controller (e.g., controller refinement processor 206, see FIG. 2) such that the controller receives signals from the sensors (e.g., the vision sensors 110 and the sensors 112) and determines characteristics of one or more of the operation, environment or the like. In examples, the sensors (e.g., the vision sensors 110 and the sensors 112) include one or more sensors, such as, optical, LiDAR, radar, laser, ultrasonic height sensors, a camera, or the like. The controller uses the determined characteristics to automate farming operations and obtain information about one or more of the farming operations, the agricultural vehicle 102, or the agricultural implement 104, in one or more examples. As discussed herein, the controller transmits control signals to components of one or more of the agricultural vehicle 102 (e.g., actuators) or the agricultural implement 104 to automate farming operations.

As described herein, the one or more vision sensors 110 observe crops, terrain, or the like, and an associated controller (e.g., refinement controller 202 (shown in FIG. 2), or the like) of the agricultural assembly 200 identifies one or more features from the observations. For instance, the controller identifies crops, terrain, or the like, and facilitates the determination of one or more characteristics of the identified crops or one or more characteristics of the identified terrain. In some examples, one or more characteristics of the identified crops include one or more characteristics of the identified terrain.

The controller determines a difference between the position of a crop target (e.g., of a crop edge) and the position of the agricultural implement 104 (e.g., an end of the agricultural implement 104). The controller transmits signals to one or more implement actuators 108 to guide the agricultural implement 104 toward the crop target based on the one or more identified characteristics. In another example, the guidance includes decreasing the difference between the crop target position and the agricultural mower implement 104, for instance, toward a difference of zero. In another example, guidance includes aligning the agricultural mower implement 104 (e.g., align an implement end and the crop edge). The operation of the agricultural implement 104 is monitored by the controller in contrast to (or in addition to) steering of the agricultural vehicle 102 as is the case with the operator (farmer) control. The controller and the one or more implement actuators 108 control the articulating arm 106 in cooperation with the one or more vision sensors 110 based on the identified crop (and associated one or more characteristics), terrain, or the like. For instance, the one or more actuators 108 move the agricultural implement 104 relative to the identified crops instead of the agricultural vehicle 102 moving the agricultural mower implement 104.

Additionally, the agricultural implement 104 is, in one example, based on identification and analysis of the position of agricultural implement 104 relative to crop target in contrast to gross left-handed movement or right-handed movement of the implement triggered by GPS-identified change in direction (e.g., end of row turning, heading changes or the like). Accordingly, as described herein, the agricultural assembly 100 provides accurate control and guidance of the associated agricultural implement 104 relative to one or more of the identified crops, terrain, or the like.

Typically, controllers (e.g., the existing agricultural controller 208 (FIG. 2) are programmed to ignore the agricultural implement 104 detected by the sensors (e.g., the vision sensors 110 and the sensors 112), to not falsely alert the user of obstacles in the way of either the agricultural vehicle 102 or the agricultural implement 104. However, in examples of the present disclosure, the agricultural assembly 100 includes a refinement controller 202 (shown in FIG. 2), in communication with the existing agricultural controller 208 of the agricultural assembly 100 to determine when the agricultural implement 104 has been changed, detect wear and operation patterns of the agricultural implement 104, and control the agricultural vehicle 102 and the agricultural implement 104 based on information gathered relating to the agricultural vehicle 102 or the agricultural implement 104.

FIG. 2 illustrates a schematic view of one example of an agricultural assembly 200 including a refinement controller 202 coupled with an agricultural vehicle 204. In one example, the refinement controller 202 is a standalone system that is coupled with the agricultural assembly 100 (FIG. 1). In the present example shown in FIG. 2 the refinement controller 202 is coupled with the agricultural vehicle 204. In another example, the refinement controller 202 is coupled with one or more of the vehicle 204, implement 104 or the like. As discussed herein, the refinement controller 202 permits the detection and control of agricultural implements (e.g., the agricultural implement 104, see FIG. 1), for instance, with existing actuators 214 and sensors 216 of the agricultural assembly 200 (e.g., one or more of the vehicle 204 or implements 104 attached thereto). The detection and control provided with the refinement controller 202 expands the capabilities of one or more of the agricultural vehicle 204 or agricultural implement 104.

As shown in the example in FIG. 2, the agricultural vehicle 204 includes an existing agricultural controller 208, a perception controller 210, and a guidance and propulsion controller 212. In examples, the existing agricultural controller 208, the perception controller 210, and the guidance and propulsion controller 212 are included in a composite controller that provides instructions to the actuators 214 and receives signals from the sensors 216 for controlling components of the agricultural vehicle 204, for instance, to automate agricultural operations. In other examples, two or more of the existing agricultural controller 208, the perception controller 210, and the guidance and propulsion controller 212 are combined in any combination to provide adequate processing capabilities based on the information received from the various components of the agricultural vehicle 204. In the example shown in FIG. 2, each of the existing agricultural controller 208, the perception controller 210, and the guidance and propulsion controller 212 are different controllers that conduct different aspects of the operation of the agricultural vehicle 204.

In one example, the guidance and propulsion controller 212 is in communication with one or more of a transmission system 218, a steering system 220, and a brake system 222. In examples, the transmission system 218, the steering system 220, and the brake system 222 include their own sub-controllers provided with the guidance and propulsion controller 212. As shown in the example shown in FIG. 2, the guidance and propulsion controller 212 is in communication with each of the transmission system 218, the steering system 220, and the brake system 222 are in communication with another (e.g., through the controller 212) to cooperatively control the guidance and propulsion of the agricultural vehicle 204. In examples, the transmission system 218 includes one or more transmissions for instance, of the agricultural vehicle 204, an implement or attachment (e.g., power take-off PTO) of the agricultural vehicle 204. The steering system 220 steers the agricultural vehicle 204, in one or more examples, with associated steering mechanisms. The brake system 222, in non-limiting examples, includes brake systems of one or more of the agricultural vehicle 204 or implement connected to the agricultural vehicle 204.

In examples, the actuators 214 includes one or more of an engine actuator 224, a tractor hydraulics actuator 226, and an implement actuator 228. In examples, the engine actuator 224 includes, but is not limited to, one or more of a throttle, choke, control valve, voltage regulator, current regulator, fuel pump or the like to control an engine of the vehicle based on control signals sent from a controller (e.g., one or more of the existing agricultural controller 208 or controller refinement processor 206) to adjust engine speed, engine power or other characteristics of the engine to supply power to the agricultural vehicle 204. The hydraulics actuator 226 includes, but is not limited to, one or more of a hydraulic pump, control valves, hydraulic motor or other associated hydraulic components to control one or more features of the agricultural vehicle 204 or associated implement. An implement actuator 228 includes one or more actuators (or an interface connected to those actuators) that control one or more implement features of implements connected to the agricultural vehicle 204, according to an example of the present disclosure. For instance, implement features include, but are not limited to, hydraulic, pneumatic, electrical, electromechanical or mechanical components.

In examples, the sensors 216 includes one or more existing sensors of the vehicle, implement or both, such as but not limited to, global positioning sensor 230, camera 232 (still, video, stereoscopic or the like), LIDAR 234, radar 236, infrared sensor 238, ultrasound sensor 240). In examples, the sensors 216 include a combination of any two or more existing sensors. In examples, the global positioning sensor (GPS) 230 is a satellite-based navigation system that provides precise location and time information to users of the agricultural vehicle 204, implement or both. In other examples, the cameras 232 include, but are not limited to, RGB cameras, near-infrared cameras, multispectral cameras, thermal cameras, hyperspectral cameras, stereo cameras, UAV-based cameras, any combination thereof, or the like, configured to capture information about components of the agricultural vehicle 204 or the environment proximate to the agricultural vehicle 204 (e.g., around, forward, behind, to the sides or the like). In one or more examples, the LIDAR 234 sensors provide high-resolution, three-dimensional information about the agricultural vehicle 204, surroundings or the like permitting the agricultural vehicle 204 to navigate by detecting obstacles, other vehicles or farming implements, humans or animals in the field. In examples, the radar 236 sensors detect, locate, track, and recognize objects (e.g., other farming vehicles, animals, vehicles, buildings, terrain obstacles, crops, or the like) by transmitting electromagnetic energy and observing the returned echoes from intercepted objects. In examples, the infrared 238 sensors emit infrared light and detect the reflection of this light from nearby objects. The time it takes for the light to return to the infrared 238 sensor permits the calculation of distance to the object (e.g., other farming vehicles, animals, vehicles, buildings, terrain obstacles, crops, or the like). The ultrasound sensors 240 (e.g., ultrasonic sensors) emit sound waves with frequencies higher than the audible range for humans (e.g., above 20 kHz) to detect objects such as, but not limited to, other farming vehicles, animals, vehicles, buildings, terrain obstacles, crops, or the like and measure distance between the objects and the sensors 240 (e.g., mounted on the agricultural vehicle 204, implement or accessory).

In one or more examples, the existing agricultural controller 208 is in communication with and controls the guidance and propulsion of the agricultural vehicle 204 (via the guidance and propulsion controller 212) and the engine and implement operation by way of the actuators 214. The existing agricultural controller 208 is in communication with the perception controller 210 and the sensors 216 (e.g., the global positioning sensor 230, the cameras 232, the LIDAR 234, the radar 236, the infrared 238, the ultrasound 240), in examples as disclosed herein. In examples, the perception controller 210 processes the one or more signals from the sensors 216, for instance to provide identified characteristics to the agricultural controller 208. For example, the perception controller 210 is configured to filter, amplify, scale, identify, index, aggregate or the like the one or more signals from the sensors 216.

Referring again to the example shown in FIG. 2, the refinement controller 202 includes one or more of a controller refinement processor 206 having processing circuitry 244, a memory 246 with instructions 248, a system interface 250, a database 258, and a machine learning component 260.

In examples, the controller refinement processor 206 includes processing circuitry 244, and the memory 246 includes instructions 248. The controller refinement processor 206 (or the processing circuitry 244) is coupled to the memory 246, such that, in non-limiting examples, the instructions 248, when executed by the processing circuitry 244, cause the processing circuitry 244 to perform various operations to control the agricultural vehicle 204, for instance through a system interface 250. In examples, the system interface 250 includes a sensor interface 252, a propulsion interface 254, and an actuator interface 256. As described herein, the refinement controller 202 and its controller refinement processor 206 expand the capabilities of the agricultural assembly and the existing agricultural controller 208 by leveraging one or more of existing controllers (208, 212, 242), actuators 214 or sensors 216 in supplemental (potentially different) manners to permit enhance autonomous operation of the agricultural assembly.

In one or more examples, the sensor interface 252 is configured to communicate with one or more of the existing agricultural controller 208, the perception controller 210, or the sensors 216 to receive one or more signals 242 from any one or more of the sensors 216 (examples are shown in FIG. 2). In examples, the propulsion interface 254 communicates with any one of the existing agricultural controller 208 the guidance and propulsion controller 212 or actuators 214 to provide control instructions to the with the transmission, steering, brake systems 218, 220, 222, actuators 214 or the like. In examples, the system interface 250 having the actuator interface 256 communicates with one or more of the existing agricultural controller 208, the perception controller 210 or the actuators 214 to provide control instructions to one or more of the engine actuator 224, the hydraulics actuator 226, or the implement actuator 228.

In examples, the instructions 248 are implemented with the controller refinement processor 206. For instance, the processing circuitry 244 initiates the instructions 248 to cause the controller refinement processor 206 to determine, by detecting a change in the one or more signals (e.g., from any one or more of the sensors 216), a new configuration of the agricultural assembly or the agricultural vehicle 204). The new configuration of the agricultural assembly is indicative of a change to an implement (e.g., a new agricultural implement 104, see FIG. 1) of the agricultural assembly (e.g., the agricultural assembly 100, see FIG. 1, the agricultural vehicle 102, see FIG. 1, the agricultural assembly 200 or the agricultural vehicle 204). In other words, the controller detects, based on the one or more signals of the one or more existing sensors, when an agricultural implement of the agricultural vehicle is changed to a different implement. The instructions 248 further cause the processing circuitry 244 of the controller refinement processors 206 to select, based on the new configuration, a sensor profile to monitor the implement and an environment surrounding, proximate, or around, the implement and the agricultural assembly, according to one or more examples. In examples, the sensor profile alters a sensor monitored area, zone, region or the like that the controller (e.g., the sensor interface 252, the perception controller 210, the existing agricultural controller 208, or controller refinement processor 206) analyzes to determine characteristics of the agricultural assembly, the agricultural vehicle, environment or the agricultural implements.

In examples, controller refinement processor 206 (or the processing circuitry 244 of controller refinement processor 206) are in communication with the machine learning component 260. The machine learning component 260 provides (e.g., generates, stores, maintains or the like) training attributes 262 (e.g., known environments around the agricultural assembly based on known sensor inputs). For example, the training attributes 262 can be known configurations of agricultural implements attached to the agricultural vehicle, agricultural farming outputs, landmarks or other obstacles, or the like, that can be detected based on the signals received. The training attributes 262 are communicated to other controllers (e.g., controller refinement processor 206, the existing agricultural controller 208, the perception controller 210, or the guidance and propulsion controller 212) of the agricultural assembly 200 for further processing. For example, the instructions 248 cause the processing circuitry 244 to determine the new configuration by comparing the change in the one or more signals compared to the training attributes 262 of the machine learning component 260 to determine a change of the agricultural implement. In another example, the training attributes 262 of the machine learning component 260 provide thresholds, target values or the like for comparison against signals from the sensors representing determined charactersistics of one or more of the environment, agricultural assembly, agricultural vehicle, agricultural implement or the like.

In other examples, the controller refinement processor 206 (or the processing circuitry 244 of controller refinement processor 206) communicates with the database 258. The database 258, according to another example, stores information (e.g., images, signals, patterns, or the like) obtained by other controllers (e.g., controller refinement processor 206, the existing agricultural controller 208, the perception controller 210, or the guidance and propulsion controller 212) of the agricultural assembly 200 for further processing. For example, the instructions 248 cause the processing circuitry 244 to determine the new configuration by comparing the change in one or more signals compared to information obtained from the database 258 (e.g., thresholds, target values, or the like) to determine a change in the agricultural implement.

In examples, the change in one or more signals indicates any one or more of removing the implement (e.g., 104, see FIG. 1) from the agricultural assembly (e.g., 100), the agricultural vehicle 102 (FIG. 1), the agricultural assembly 200 in FIG. 2, or the agricultural vehicle 204), attachment of a second implement (e.g., a second agricultural implement 104) to the agricultural assembly, replacing the implement (e.g., 104 with the second implement on the agricultural assembly), wear, damage, misalignment or incorrect positioning of the implement (e.g., the agricultural implement 104). In examples, the instructions 248 cause the processing circuitry 244 of the refinement processor 206 to determine, based on the one or more signals and determined characteristics (e.g., from one or more of the sensors 216), a change to the implement installed on the agricultural assembly.

The instructions 248 cause the processing circuitry 244 to monitor one or more of a status of the implement (e.g., a speed, a mode (e.g., on or off)), interaction with the environment, terrain, or the like), operation of the implement (e.g., number of rotations, amount of flex of a component, or the like), or errors of the implement (e.g., wear, deformation, indication the implement is not working as intended, or the like). The instructions 248 further cause the processing circuitry 244 to transmit, via the implement interface, a control signal to one or more existing actuators (e.g., the engine actuator 224, the hydraulics actuator 226, the implement actuator 228, or the like) to control a position of the implement relative to the agricultural assembly (including changing, maintaining position or the like). In other words, in examples, the controller (e.g., controller refinement processor 206, the existing agricultural controller 208, the guidance and propulsion controller 212, or the transmission system 218) control implements (e.g., the agricultural implement 104) attached to the agricultural assembly based on one or more signals received from the sensors (e.g., sensors 216).

In examples, the instructions 248 cause the processing circuitry 244 to determine, based on the one or more signals (e.g., from one or more of the sensors 216), a change to the implement installed on the agricultural assembly.

The instructions 248 further cause the processing circuitry 244 to transmit, via the propulsion interface (e.g., the guidance and propulsion controller 212 or the actuator interface 256), a control signal to one or more propulsion actuators (e.g., the engine actuator 224, the hydraulics actuator 226, the implement actuator 228, or the like) to change an operation speed of the implement. For example, the control signal changes a rotational, vibrational, translational, or other speed the implement moves to alter the power exerted by the implement. In other examples, the control signal changes a speed the agricultural vehicle (e.g., the agricultural vehicle 102 (FIG. 1) or the agricultural vehicle 204) travels around the farming environment.

As described herein, the refinement controller 202 expands the capabilities of the agricultural assembly 200 by leveraging one or more of the sensors 216 or actuators 214 (or 212) or the like to provide expanded capabilities that identify different implements and permit alteration or expansion of control of the implements once identified. In another example, the refinement controller 202 permits sensing on and around (e.g., proximate) to the agricultural assembly with sensors 216, for instance to monitor different (or supplemental) characteristics and control one or more of the implement or agricultural vehicle actuators to expand the capabilities of the agricultural assembly beyond initially assigned tasks or functions.

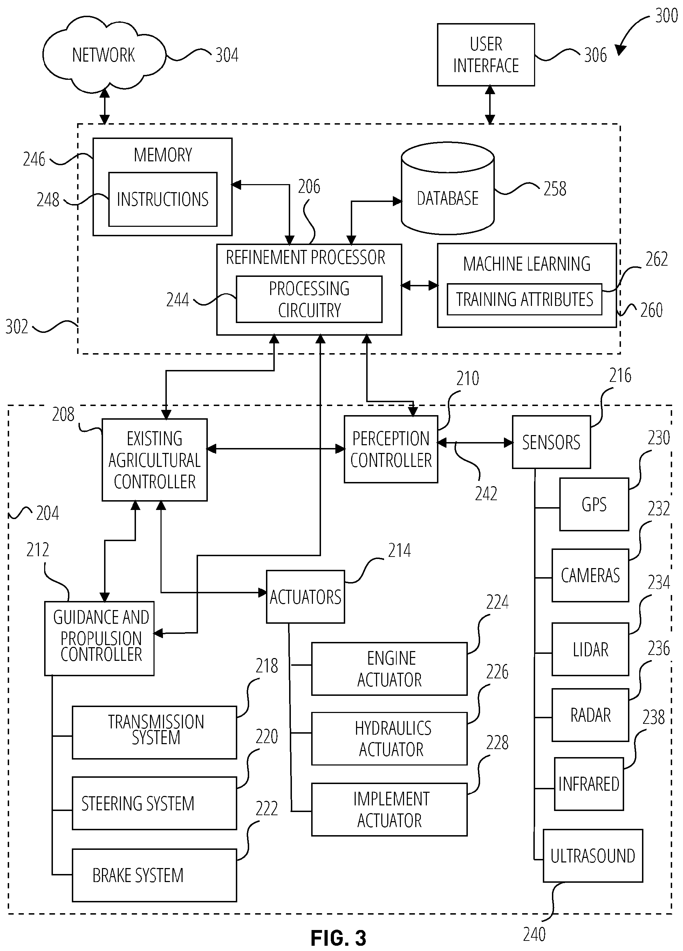

FIG. 3 illustrates a schematic view of another example of an agricultural assembly 300, including a refinement controller 302 and an agricultural vehicle 204. In this example, the refinement controller 302 does not include a system interface, as shown in FIG. 2. Instead, the controller refinement processor 206 is in direct communication with one or more of the existing agricultural controller 208, the guidance and propulsion controller 212, and the perception controller 210. As such, in examples, the processing circuitry 244 is configured to receive signals from one or more of the existing agricultural controller 208, the guidance and propulsion controller 212 (and their associated actuators), and the perception controller 210 (in communication with the sensors 216), , process those signals to determine characteristics, and send controlling signals to actuators to control one or both of the agricultural vehicle 204 or the agricultural implement (e.g., the agricultural implement 104 (FIG. 1).

FIG. 3 illustrates a schematic view of an example of an agricultural assembly 300, including the refinement controller 302 and the agricultural vehicle 204. In this embodiment, the refinement controller 302 is streamlined and directly communicates between the controller refinement processor 206 and other control units within the agricultural vehicle 204. As described above, in contrast to the configuration depicted in FIG. 2, the system interface (250 shown in FIG. 2) is omitted, simplifying the architecture, and potentially reducing latency in signal processing and command execution. Further, direct communication decreases the number of components of the refinement controller 302, and in some examples decreases expense and implementation.

The controller refinement processor 206 in FIG. 3 thereby directly communicates with one or more of the existing agricultural controller 208, the guidance and propulsion controller 212, or the perception controller 210. This direct communication setup, in some examples, permits a more integrated and responsive control system, for instance by decreasing intervening components, relays or the like. The processing circuitry 244 within controller refinement processor 206 receives various signals from the agricultural assembly including, but not limited to, positional data, sensor output, operational status, and environmental feedback for the various features (e.g., sensors, actuators or the like) of the agricultural assembly 300.

According to a non-limiting example, upon receiving these signals from the sensors 216, the processing circuitry 244 processes the data to synthesize an operational picture regarding the operation of the agricultural assembly 300. Synthesizing examples by the processing circuitry 244 of the controller refinement processor 206 include one or more algorithms or data fusion techniques to analyze the operation of the agricultural vehicle 204 and any attached implements. In examples, synthesizing by the processing circuitry 244 includes identifying patterns, detecting anomalies, predicting failure and maintenance solutions, and adaptive responses to conditions (e.g., in the environment, of the agricultural assembly, both or the like).

After processing the signals from one or more of the sensors 216, the controller refinement processor 206 optionally provides control signals for one or more respective controllers. According to one or more examples, the control signals are commands tailored to control the behavior of one or more components of the agricultural assembly 300 in real-time (including near real-time, such as within 1 to 10 seconds, 0 to 1 minutes or the like). For instance, if the perception controller 210 detects an obstacle, the controller refinement processor 206 issues commands to the guidance and propulsion controller 212 to navigate the agricultural assembly 300 around the obstacle while simultaneously adjusting one or more initial operating parameters of the agricultural implement to maintain productivity.

As also shown in FIG. 3, the agricultural assembly 300 includes a network 304 and a user interface 306. The inclusion of network 304 and user interface 306 in agricultural assembly 300 enhances the capabilities of refinement controller 302 by providing additional layers of connectivity and interaction. For example, the network 304 serves as a communication backbone, permitting the integration of the agricultural assembly 300 with external systems and databases. Through network 304, the controller refinement processor 206 accesses cloud-based services, such as weather forecasts, satellite imagery, big data analytics, supplemental training attributes, a supplemental database in addition to (or in lieu of) the database 258 for enhanced agricultural operations in one or more examples. For example, by analyzing weather patterns, the system adjusts spraying prescriptions, planting or harvesting prescriptions or the like. In examples, the network 304 also permits remote monitoring and control, allowing operators or farm managers to oversee and control the operations of the agricultural vehicle 204 from a distance, enhancing the flexibility and responsiveness of the agricultural operations. Additionally, operators may, through the controller refinement processor 206 accessible through the network 304, specify one or more taskings for the various sensors 216 (e.g., characteristics to monitor) and operation of the actuators 214 or 212 to address monitored characteristics.

In one or more examples, the user interface 306 permits direct interaction for operators or technicians with the refinement controller 302. In a non-limiting example, the user interface 306 displays real-time (including near real-time) data, system statuses, and alerts generated by the controller refinement processor 206 or existing agricultural controller 208. In examples, the user interface 306 offers controls and visualizations, to facilitate understanding by operators of complex data processed by the system. For instance, the user interface 306 visually represents the path of the agricultural vehicle, highlights areas of interest or concern on a map or on a visual representation of the agricultural assembly 300, and provides step-by-step instructions or options for resolving issues. Additionally, in another example, the user interface 306 permits manual overriding of automated systems by an operator in case of emergency or to input new parameters, tasks or the like for agricultural operations. New parameters include but are not limited to, changing the type of sensor profile selected based on user expertise or new operational requirements according to one or more examples of the present disclosure. For example, a user can update a sensor profile relating to a type of implement attached to the farming assembly, a type of farming operation, or the like, to override a detected arrangement and transmitted sensor profile determined by the system.

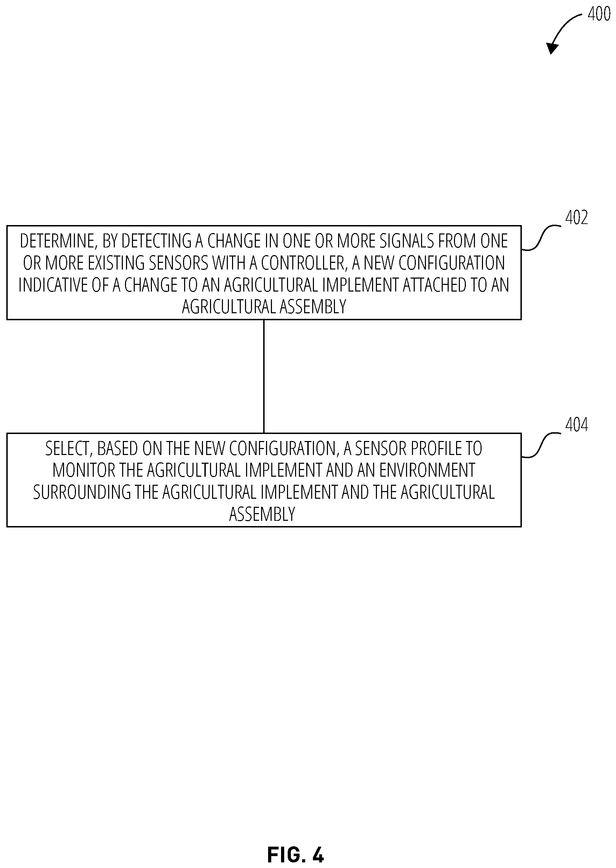

FIG. 4 illustrates a block diagram of one example of a method 400 for cooperative monitoring for agricultural implements. In examples, the method 400 provides a systematic approach to monitoring and controlling agricultural implements attached to an agricultural assembly, such as a tractor or combine. As described herein a controller, such as a refinement controller, cooperates with one or more of existing controllers, actuators, propulsion and guidance systems, or sensors of the agricultural assembly (e.g., one or more of a vehicle or implement) to monitor and automate the operation of an agricultural implement, for instance by expanding the capabilities of the existing agricultural assembly beyond an initial configuration.

At operation 402, the method 400, according to an example, includes detecting a change in one or more signals from the one or more existing sensors (e.g., sensors 216, first shown in FIG. 2). In one example, the detected change is indicative of a new configuration of the agricultural implement. For instance, detected change includes, but is not limited to, detection of an obstacle within a portion of a sensor monitoring zone that appears to move with successive scans with the sensor (e.g., the obstacle appears to follow or move with the agricultural assembly).

Changes detected in one or more signals indicate the attachment or detachment of an implement, a switch to a different implement, or the detection of wear or damage to the implement. The controller, for instance, part of a refinement controller described herein, receives signals from various sensors to determine characteristics representative of changes in the configuration of the agricultural implement. The controller, for example, receives signals from various sensors to determine characteristics representative to attachment or detachment of an implement by monitoring a pin, clamp, etc. The controller, in another example, detects wear or damage by comparing captured images or video of the agricultural assembly with training attributes (e.g., from machine learning) or comparative image examples of damage to different components. The controller then assigns a confidence that is compared with confidence thresholds (e.g., 70 percent likelihood) of an observation detecting an implement being worn or damaged.

The controller is also configured to analyze sensor data from a variety of sensors including existing sensors provided with the agricultural assembly, and may include, but are not limited to, visual, auditory, vibratory, strain, stress, kinematic or other sensors, to evaluate the state of the implement.

Upon the determination of a change to an agricultural implement, operation 404 includes selecting an appropriate sensor profile for monitoring the implement and the farming environment surrounding the agricultural assembly. In an example, the controller (e.g., the refinement controller) chooses a sensor profile corresponding to the determined configuration. The chosen sensor profile includes one or more characteristics that adjust sensors of the agricultural assembly in a manner that cooperates with the detected change to the agricultural implement. For example, the sensor profile includes, but is not limited to, characteristics that adjust sensor sensitivity, range, focus of the sensors (e.g., features the sensor detects) or the like. In examples, the selection and implementation of the sensor profile ensures the monitoring system is operable with the current implement (including changes to the current implement), thereby permitting control and automation of its operations in a manner consistent with the implement.

The sensor profile adapts the features of the agricultural assembly to variations of implements (e.g., types, models or the like) including, for example, adapting monitoring with the sensors to compensate for the variations. For example, a sensor profile for a seeding implement focuses on sensors (e.g., visual sensors, ultrasound, or the like) on the distribution pattern of seeds. In contrast, a sensor profile for a harvesting implement directs sensor focus to monitor forthcoming crops for harvesting, crop yield (e.g., with moisture sensors, volumetric flow, weight sensors, or the like).

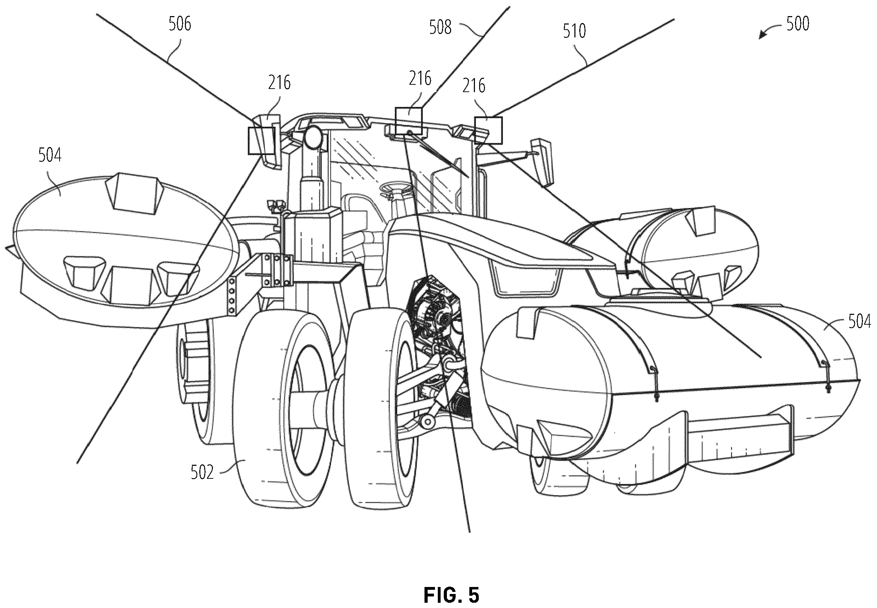

The method 400, according to examples, also includes the incorporation of machine learning components (e.g., 260, see FIG. 2) to refine the detection process and the use of training attributes (e.g., 262, see FIG. 2) to improve the accuracy of the new configuration determination. Additionally, the method 400 accounts for various scenarios, such as the removal, addition, or replacement of implements, as well as the detection of wear, damage, or misalignment of the agricultural implement. The inclusion of one or more machine learning components, detection of implement changes, and detection of wear, damage, or the like with updated sensor profiles, as discussed herein, enhances the precision and accuracy of existing monitoring systems of sensors and implementation of control instructions with actuators based on the precise and accurate sensing. For example, the machine learning components can more quickly detect a change in implement, such as, a change in size of mowing attachment, to more quickly update the sensor profile to analyze effectiveness of the new attachment as compared to the previous attachment. In another example, the machine learning component can detect a change in output (e.g., a height of the mowed agriculture, an amount of harvested stock, or the like) to determine a potential failure in the system more quickly than other comparative examples because the machine learning components can see trends and recognize likely results of such trends. These illustrative examples are not limiting, and, as will be discussed in more detail with reference to FIGS. 5-10, Applicants of the present disclosure comprehend many environments in which method 400 can be implemented to coopt sensors of state-of-the-art agricultural assemblies to better utilize their existing sensors and further automate farming operations thereof.

In summary, the method 400 represents an advanced cooperative monitoring system for agricultural implements, leveraging a controller that integrates with the existing systems of an agricultural assembly. By detecting changes in implement configuration and selecting the appropriate sensor profiles, the method 400 ensures effective monitoring and automation of agricultural implements, enhancing the efficiency and productivity of agricultural operations.

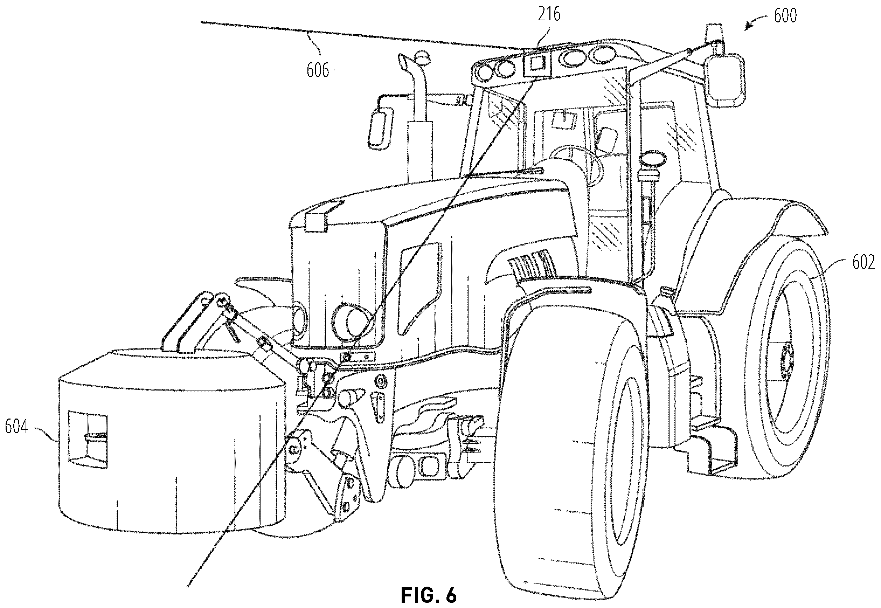

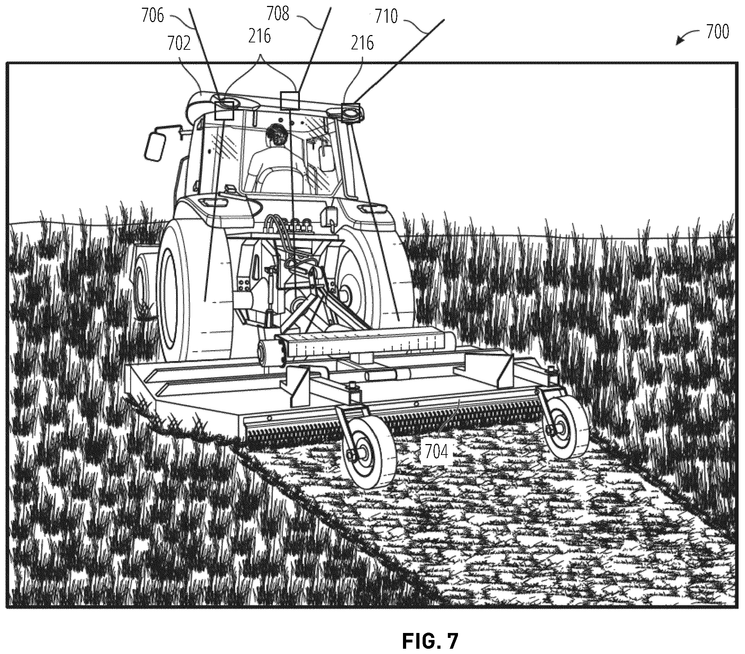

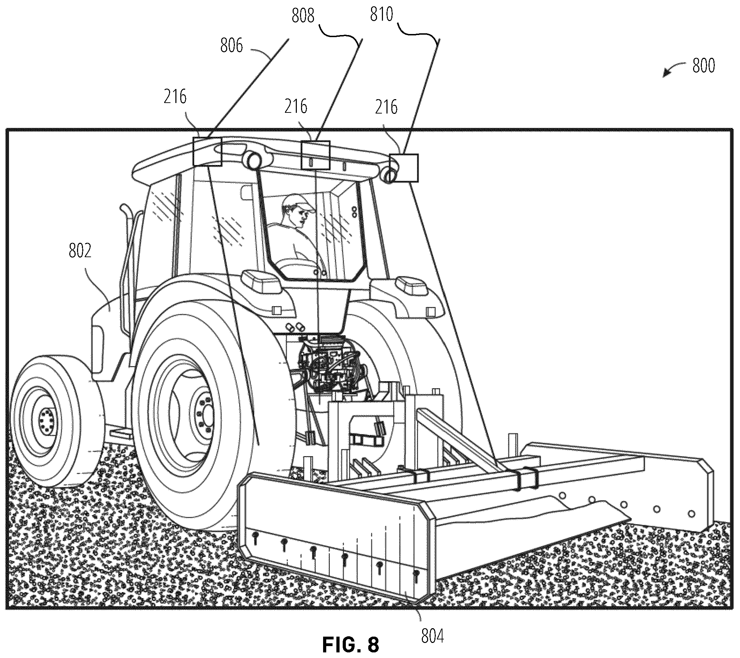

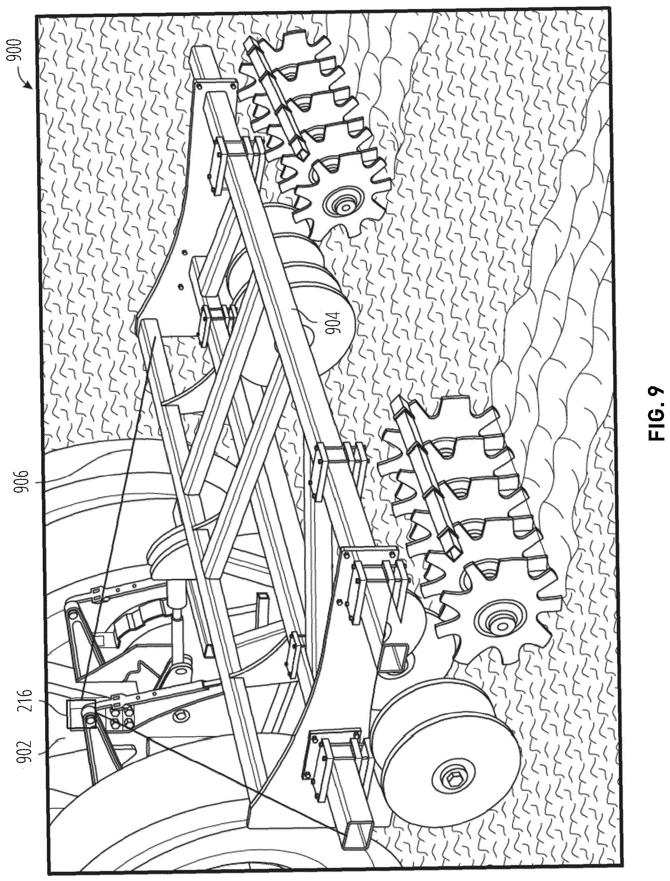

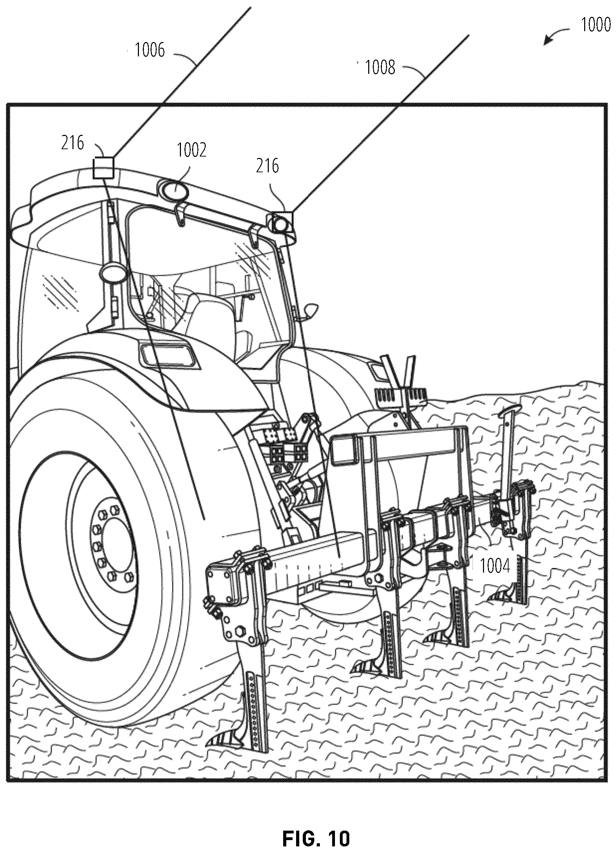

FIG. 5 - FIG. 10 are non-limiting examples of agricultural assemblies including example agricultural vehicles and agricultural implements. FIG. 5 illustrates an example agricultural assembly 500 including an agricultural vehicle 502 and an agricultural implement 504. FIG. 6 illustrates an example agricultural assembly 600 including an agricultural vehicle 602 and an agricultural implement 604. FIG. 7 illustrates an example agricultural assembly 700 including an agricultural vehicle 702 and an agricultural implement 704. FIG. 8 illustrates an example agricultural assembly 800 including an agricultural vehicle 802 and an agricultural implement 804. FIG. 9 illustrates an example of agricultural assembly 900, including an example of agricultural vehicle 902 and agricultural implement 904. FIG. 10 illustrates an example of agricultural assembly 1000, including an example of agricultural vehicle 1002 and agricultural implement 1004.

In the example shown in FIG. 5, the agricultural vehicle 502 is a prime mover (e.g., tractor, mower, combine, harvester, or the like) and the agricultural implement 504 includes storage tanks used to dispense fluids, granular products, or other farming materials, around the environment. As shown in the example of FIG. 5, one or more sensors 216 are positioned in various locations about the agricultural vehicle 502 to provide a first field of view 506, a second field of view 508, and a third field of view 510 around a perimeter of the agricultural vehicle 502. In examples, the agricultural implement 504 or agricultural implements 504 are attached with the agricultural vehicle 502 and the sensors 216 observe the agricultural implement 504 in one or more of the first field of view 506, the second field of view 508, or the third field of view 510.

The controller refinement processor 206 (first shown in FIG. 2) is in communication with the one or more sensors 216. According to some examples, the controller refinement processor 206 monitors the operations of the agricultural implements 504 and detects environmental characteristics of the farming environment around the agricultural assembly 500. For example, the controller refinement processor 206 receives signals from one or more sensors 216. The signals received from one or more sensors 216 are analyzed by the controller refinement processor 206 to determine implements or an agricultural implement 504 attached to the agricultural vehicles or the agricultural vehicle 502 of the agricultural assembly 500. For example, the controller refinement processor 206 recognizes the signals received from the one or more sensors 216 by comparing the signals of known arrangements of implements installed onto agricultural vehicles of the agricultural assemblies (e.g., either from the learning attributes (262, see FIG. 2) or images, data, or the like from one or more databases (258, see FIG. 2)).

As discussed herein, the controller refinement processor 206, according to an example, assigns a confidence level relative to the configuration of the agricultural assembly 500 corresponding to any known configurations of agricultural vehicles from the training attributes or the images, data, or the like from the one or more databases. On condition that the confidence level satisfies (e.g., exceeds, falls below or the like) a threshold value, the controller refinement processor 206 updates the sensor profile to adjust a range of signals from the one or more sensors 216 the controller refinement processor 206 analyzes to monitor the agricultural assembly 500. In another example, the sensor profile improves monitoring of the agricultural without adding sensors to the agricultural assembly 500 by adjusting the signals monitored by the controller refinement processor 206 to increase information gathered about the agricultural assembly 500 or the agricultural techniques performed by the agricultural assembly 500. For instance, if the spray pattern from a spray nozzle is identified, then further analysis includes analysis of the spray pattern (angle of spray, height of origin, droplet size, droplet vectors); the same is true for granular spreaders.

In the example shown in FIG. 5, the controller refinement processor 206 updates a sensor profile to ensure the controller refinement processor 206 ignores signals received from the agricultural implement 504 so the controller refinement processor 206 does not detect the agricultural implement 504 as an obstacle in the way of the agricultural assembly 500. Such comparison of signals from one or more sensors 216 to the images (or training attributes) is done with the knowledge base as discussed herein. Thus, the tanks (e.g., the agricultural implement 504) are identified based on the comparison and then ignored until something about implementation changes the comparison. For instance, a new (larger/smaller) tank is installed that causes a change in the confidence value or an identification of the new implement based on comparison with a different image, threshold, or training attribute from the knowledge base of the system.

In the example shown in FIG. 6, the agricultural vehicle 602 is a prime mover (e.g., tractor, mower, combine, harvester, or the like) and the agricultural implement 504 is a weight used in farming operations. As shown in the example of FIG. 6, one or more sensors 216 (only a single sensor is shown in FIG. 6, but in examples, one or more sensors 216 are installed around the periphery of the agricultural vehicle 602) is positioned in different locations about the agricultural vehicle 602 such that a field of view 606 extends beyond a perimeter of the agricultural vehicle 602. The agricultural implement 604 is attached to a front of the agricultural vehicle 502, and the sensors 216 are configured to capture the agricultural implement 604 therein, at least within the field of view 606. The controller refinement processor 206 (first shown in FIG. 2) detects operations of the agricultural implement 604 and environmental characteristics of the farming environment around the agricultural assembly 600.

For instance, the controller refinement processor 206 implements a sensor profile to ignore signals from the one or more sensors 216 indicative of the weight (e.g., the agricultural implement 604) installed on the front of the agricultural vehicle 602 so the agricultural implement 604 does not trigger a false obstruction detection for the agricultural vehicle 602. The controller refinement processor 206 compares the signals received from the one or more sensors 216 with the knowledge base of the system (e.g., training attributes, 262, see FIG. 2, or images, data, or the like from one or more databases 258, see FIG. 2) to monitor the agricultural assembly 600. Comparison of signals from the one or more sensors 216 to the images (or training attributes) is done, in one example, with the knowledge base as discussed herein. For instance, the weight (e.g., the agricultural implement 504) is identified based on the comparison and the controller refinement processor 206 ignores the weight until the comparison changes in some manner. For instance, a new (larger/smaller) weight is installed that precipitates a change in the confidence value of identification of the implement or a new implement is detected and identified based on comparison with a different image, threshold, or training attribute (relative to a previous comparison) from the knowledge base of the system.

In the example shown in FIG. 7, the agricultural vehicle 702 is a prime mover (e.g., tractor, mower, combine, harvester, or the like) and the agricultural implement 704 includes a mower attachment. As shown in the example of FIG. 7, one or more sensors 216 are positioned in different locations about the agricultural vehicle 702. The one or more sensors 216 provide one or more of a first field of view 706, a second field of view 708, or a third field of view 710 around a perimeter of the agricultural vehicle 702. In examples, the agricultural implement 704 is attached to a rear of the agricultural vehicle 702 and the sensors 216 capture the agricultural implement 704 in one or more of the first field of view 706, the second field of view 708, or the third field of view 710.

The controller refinement processor 206 (first shown in FIG. 2), according to some examples, detects one or more of operation of the agricultural implement 704 or environmental characteristics of the environment around the agricultural assembly 700. For example, the controller refinement processor 206 determines a sensor profile-determined by comparison to the knowledge base of the system-that permits ingoring signals from the one or more sensors 216 indicative of the agricultural implement 704 being attached to the agricultural vehicle 702.

The sensor profile improves the accuracy of the monitoring of the controller refinement processor 206 of the agricultural assembly 700 and the agricultural implement 704 attached to the agricultural vehicle 702. For example, the controller refinement processor 206 tasks the sensors on the agricultural vehicle 702 cooperatively to provide additional information. In one example, the controller refinement processor 206 analyzes sensor signals from one or more sensors 216 to detect features beyond the original tasking for the sensors 216. As described herein the cooperative taskings facilitates automating agricultural operations of the agricultural assembly 700. For instance, the controller refinement processor 206 analyzes the signals from the one or more sensors 216, originally tasked to monitor the environment, to also monitor the agricultural operations of the agricultural implement 704. The enhanced monitoring and associated analysis permit observation and control of the agricultural implement 704 during operation of the agricultural assembly 700.

For example, the one or more sensors 216 monitor a line of grass behind the agricultural implement 704 in not mowed (e.g., image analysis performed by the controller refinement processor 206 detects a shadow of the unmowed grass, stereo/3D analysis of images detects grass having a greater height than mowed grass, or the like). In response to detecting the unmowed grass, the controller refinement processor 206 alters a position or orientation of the agricultural implement 704 or operations (e.g., blade rpms, blade height) to cut along the unmowed line of grass.

In the example shown in FIG. 8, the agricultural vehicle 802 includes a prime mover (e.g., tractor, mower, combine, harvester, or the like) and the agricultural implement 804 includes a grader. As shown in the example of FIG. 8, one or more sensors 216 are positioned in different locations about the agricultural vehicle 802 so a first field of view 806, a second field of view 808, and a third field of view 810 extend around a perimeter of the agricultural vehicle 802. In examples, the agricultural implement 804 is attached to a rear of the agricultural vehicle 802 so that the sensors 216 capture the agricultural implement 804 therein one or more of the first field of view 806, the second field of view 808, and the third field of view 810.

The controller refinement processor 206 (first shown in FIG. 2), according to some examples, detects operations of the agricultural implement 804 as well as environmental characteristics of the environment around the agricultural assembly 800. For example, the controller refinement processor 206 determines a sensor profile- by comparison of the signals from the sensors 216 to the knowledge base of the system -that permits ignoring signals from the one or more sensors 216 indicative of the agricultural implement 804 being attached to the agricultural vehicle 802. The sensor profile improves the accuracy of the monitoring of the controller refinement processor 206 of the agricultural assembly 800 and the agricultural implement 804 attached to the agricultural vehicle 802. For example, the controller refinement processor 206 utilizes the sensors coopted on the agricultural vehicle 802 to provide additional information by monitoring the signals from the one or more sensors 216 to help automate agricultural operations of the agricultural assembly 800. For instance, the controller refinement processor 206 analyzes the signals from one or more coopted sensors 216 to monitor the agricultural operations of the agricultural implement 804 to ensure the agricultural implement 804 is performing as expected during the operation of the agricultural assembly 800.

In the example shown in FIG. 9, the agricultural vehicle 902 includes a prime mover (e.g., tractor, mower, combine, harvester, or the like) and the agricultural implement 904 includes a tilling attachment (e.g., a harrow). As shown in the example of FIG. 9, one or more sensors 216 (only one is shown in FIG. 9, but more are located around the agricultural vehicle 902 to detect the area surrounding the agricultural vehicle 902) is positioned near the rear of the agricultural vehicle 902 such that field of view 906 extends behind the agricultural vehicle 902. In examples, the agricultural implement 904 is attached to the rear of the agricultural vehicle 902, and the sensors 216 capture the agricultural implement 904 therein the field of view 906.

The controller refinement processor 206 (first shown in FIG. 2), according to some examples, monitors operations of the agricultural implement 904 as well as environmental characteristics of the environment around the agricultural assembly 900. For example, the controller refinement processor 206 determines a sensor profile- by comparison of the signals from the sensors 216 to the knowledge base of the system -that permits ignoring signals from the one or more sensors 216 indicative of the agricultural implement 904 being attached to the agricultural vehicle 902. The sensor profile improves the accuracy of the monitoring of the controller refinement processor 206 of the agricultural assembly 900 and the agricultural implement 904 attached to the agricultural vehicle 902. For example, the controller refinement processor 206 utilizes the sensors coopted on the agricultural vehicle 902 to provide additional information by monitoring the signals from the one or more sensors 216 to help automate agricultural operations of the agricultural assembly 900. For instance, the controller refinement processor 206 analyzes the signals from the one or more coopted sensors 216 to monitor the agricultural operations of the agricultural implement 904 to ensure the agricultural implement 904 is performing as expected during operation of the agricultural assembly 900.

In the example shown in FIG. 10, the agricultural vehicle 1002 includes a prime mover (e.g., tractor, mower, combine, harvester, or the like) and the agricultural implement 1004 includes pulling ripper. As shown in the example of FIG. 10, one or more sensors 216 are positioned in different locations about the agricultural vehicle 1002 such that a first field of view 1006 and a second field of view 1008 extend around a perimeter of the agricultural vehicle 1002. The agricultural implement 1004 attaches to a rear of the agricultural vehicle 1002 and the sensors 216 capture the agricultural implement 1004 therein one or more of the first field of view 1006 and the second field of view 1008.

The controller refinement processor 206 (first shown in FIG. 2), according to some examples, monitors operations of the agricultural implement 1004 as well as environmental characteristics of the environment around the agricultural assembly 1000. For example, the controller refinement processor 206 determines a sensor profile-by comparison of the signals from the sensors 216 to the knowledge base of the system-that permits ignoring signals from the one or more sensors 216 indicative of the agricultural implement 1004 being attached to the agricultural vehicle 1002. The sensor profile improves the accuracy of the monitoring of the controller refinement processor 206 of the agricultural assembly 1000 and the agricultural implement 1004 attached to the agricultural vehicle 1002. For example, the controller refinement processor 206 utilizes the sensors coopted on the agricultural vehicle 1002 to provide additional information by monitoring the signals from one or more sensors 216 to help automate operations of the agricultural assembly 1000. For instance, the controller refinement processor 206 analyzes the signals from one or more coopted sensors 216 to monitor the operations of the agricultural implement 1004 to ensure the agricultural implement 1004 is performing as expected during the operation of the agricultural assembly 1000.

The examples of the agricultural assemblies, as shown in FIG. 5 - FIG. 10, illustrate practical examples of how the refinement controller is implemented with different types of agricultural implements. Each figure shows an agricultural vehicle equipped with a specific implement, such as storage tanks, weights, mowers, graders, tillers, and rippers. The positioning of sensors around the vehicle is strategic to ensure comprehensive monitoring of the implement's operation and the environment. The sensor data collected is then processed by the controller refinement processor and the controller refinement processor, as discussed herein by comparing the signals to the knowledge base of the system, to adjust the vehicle's navigation plan, control signals to actuators, and propulsion parameters in real-time, based on the specific implement attached as shown in the various configurations referenced in FIG. 5 - FIG. 10. This seamless integration exemplifies the capabilities of the system to adapt to a wide range of agricultural tasks, enhancing the efficiency and precision of farming operations.

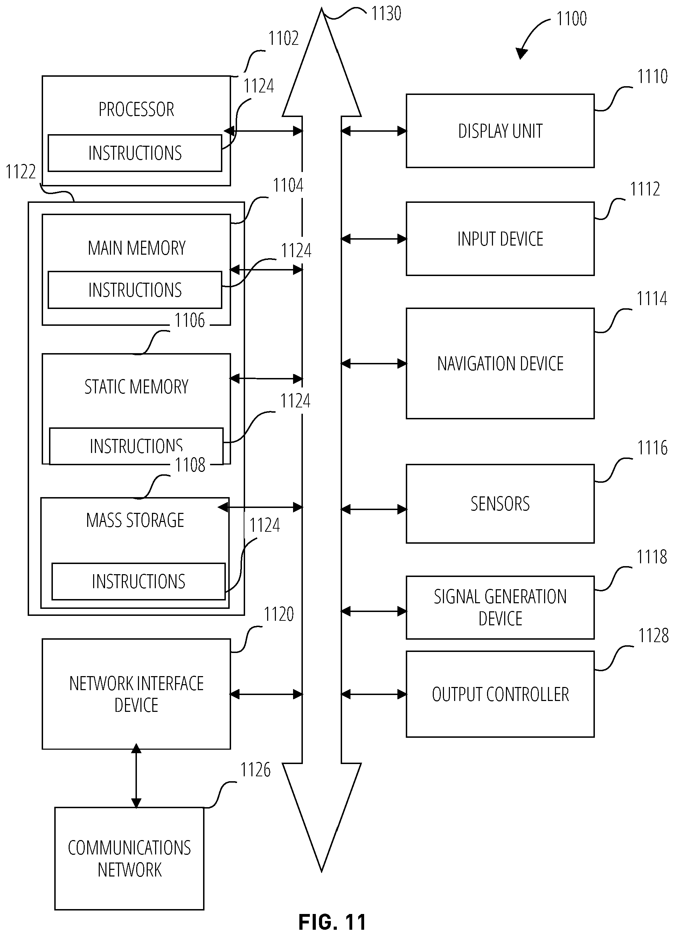

FIG. 11 illustrates a block diagram of an example machine 1100 (e.g., one or more of 202, 206, 208, 210, 212, 218, 222, 222, or 230, see FIG. 2) upon which any one or more of the techniques (e.g., methodologies) discussed herein may perform. Examples, as described herein, may include, or may operate by, logic or a number of components, or mechanisms in the machine 1100. Circuitry (e.g., processing circuitry) is a collection of circuits implemented in tangible entities of the machine 1100 that include hardware (e.g., simple circuits, gates, logic, etc.). Circuitry membership may be flexible over time. Circuitries include members that may, alone or in combination, perform specified operations when operating. In an example, hardware of the circuitry may be immutably designed to carry out a specific operation (e.g., hardwired). In an example, the hardware of the circuitry may include variably connected physical components (e.g., execution units, transistors, simple circuits, etc.), including a machine-readable medium physically modified (e.g., magnetically, electrically, moveable placement of invariant massed particles, etc.) to encode instructions of the specific operation. In connecting the physical components, the underlying electrical properties of a hardware constituent are changed, for example, from an insulator to a conductor or vice versa. The instructions enable embedded hardware (e.g., the execution units or a loading mechanism) to create members of the circuitry in hardware via the variable connections to carry out portions of the specific operation when in operation. Accordingly, in an example, the machine-readable medium elements are part of the circuitry or are communicatively coupled to the other components of the circuitry when the device is operating. In an example, any of the physical components may be used in more than one member of more than one circuitry. For example, under operation, execution units may be used in a first circuit of a first circuitry at one point in time and reused by a second circuit in the first circuitry, or by a third circuit in a second circuitry at a different time. Additional examples of these components with respect to the machine 1100 follow.

In alternative examples, the machine 1100 may operate as a standalone device or may be connected (e.g., networked) to other machines. In a networked deployment, the machine 1100 may operate in the capacity of a server machine, a client machine, or both in server-client network environments. In an example, the machine 1100 may act as a peer machine in peer-to-peer (P2P) (or other distributed) network environment. The machine 1100 may be a personal computer (PC), a tablet PC, a set-top box (STB), a personal digital assistant (PDA), a mobile telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

The machine 1100 may include one or more hardware processors 1102 (e.g., one or more of a central processing unit (CPU), a graphics processing unit (GPU), a hardware processor core, or any combination thereof), a main memory 1104, a static memory (e.g., memory or storage for firmware, microcode, a basic-input-output (BIOS), and mass storage 1108 (e.g., hard drives, tape drives, flash storage, or other block devices) some or all of which may communicate with each other via an interlink 1130 (e.g., bus). The refinement controllers 202, 302 (see FIGS. 2 and 3), controllers shown in the Figures or the like are included in one or more hardware processors 1102, main memory 1104, mass storage 1108 or the like. In one example, the refinement controllers 202, 302 are provided in distinct processors relative to other processors of the agricultural assembly 200, 300 in FIGS. 2 and 3. For instance, the refinement controllers 202, 302 are coupled with other controllers by way of cabling, wireless connections or the like. In other examples the refinement controllers 202, 302 or the like are incorporated into other controllers (e.g., processors) by way of machine-readable medium, distinct sub-processors or the like.

The machine 1100 may further include a display unit 1110, an alphanumeric input device 1112 (e.g., a keyboard), and a user interface (UI) navigation device 1114 (e.g., a mouse). In examples, the display unit 1110, input device 1112 and UI navigation device 1114 may be a touch screen display. The machine 1100 may additionally include a signal generation device 1118 (e.g., a speaker), a network interface device 1120, and one or more sensors 1116, such as a global positioning system (GPS) sensor (e.g., 230, see FIG. 2), compass, accelerometer, tachometer, speedometer, inertial measurement unit (IMU), encoders, image, video, LiDAR, radar, ultrasound, camera (still, video, stereoscopic or the like), infrared sensor (sensors 216 in FIG. 2) or other sensors. The machine 1100 may include an output controller 1128, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

Registers of the processor 1102, the main memory 1104, the static memory 1106, or the mass storage 1108 may be, or include, one or more machine-readable medium 1122 on which is stored one or more sets of data structures or instructions 1124 (e.g., software) embodying or utilized by any one or more of the techniques or functions described herein. The instructions 1124 may also reside, completely or at least partially, within any of registers of the processor 1102, the main memory 1104, the static memory 1106, or the mass storage 1108 during execution thereof by the machine 1100. In an example, one or any combination of the hardware processor 1102, the main memory 1104, the static memory 1106, or the mass storage 1108 may constitute the machine-readable media 1122. While the machine-readable medium 1122 is illustrated as a single medium, the term "machine-readable medium" may include a single medium or multiple media (e.g., a centralized or distributed database, and/or associated caches and servers) configured to store the one or more instructions 1124 (e.g., database 258, machine learning component 260, the training attributes 262 or the like, see FIGS. 2 or 3).

In examples, the processor 1102 and the main memory 1104 may include one or more processors (e.g., one or more of controller refinement processor 206, the existing agricultural controller 208, the perception controller 210, the guidance and propulsion controller 212, the actuators 214, or the sensors 216).

The term "machine-readable medium" may include any medium that is capable of storing, encoding, or carrying instructions for execution by the machine 1100 and that cause the machine 1100 to perform any one or more of the techniques of the present disclosure, or that is capable of storing, encoding or carrying data structures used by or associated with such instructions. Non-limiting machine-readable medium examples may include solid-state memories, optical media, magnetic media, and signals (e.g., radio frequency signals, other photon-based signals, sound signals, etc.). In an example, a non-transitory machine-readable medium comprises a machine-readable medium with a plurality of particles having invariant (e.g., rest) mass, and thus are compositions of matter. Accordingly, non-transitory machine-readable media are machine-readable media that do not include transitory propagating signals. Specific examples of non-transitory machine-readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; and CD-ROM and DVD-ROM disks.

In an example, information stored or otherwise provided on the machine-readable medium 1122 may be representative of the instructions 1124, such as instructions 1124 themselves or a format from which the instructions 1124 may be derived. This format from which the instructions 1124 may be derived may include source code, encoded instructions (e.g., in compressed or encrypted form), packaged instructions (e.g., split into multiple packages), or the like. The information representative of the instructions 1124 in the machine-readable medium 1122 may be processed by processing circuitry into the instructions to implement any of the operations discussed herein. For example, deriving the instructions 1124 from the information (e.g., processing by the processing circuitry) may include: compiling (e.g., from source code, object code, etc.), interpreting, loading, organizing (e.g., dynamically or statically linking), encoding, decoding, encrypting, unencrypting, packaging, unpackaging, or otherwise manipulating the information into the instructions 1124.

In an example, the derivation of the instructions 1124 may include assembly, compilation, or interpretation of the information (e.g., by the processing circuitry) to create the instructions 1124 from some intermediate or preprocessed format provided by the machine-readable medium 1122. The information, when provided in multiple parts, may be combined, unpacked, and modified to create the instructions 1124. For example, the information may be in multiple compressed source code packages (or object code, or binary executable code, etc.) on one or several remote servers. The source code packages may be encrypted when in transit over a network and decrypted, uncompressed, assembled (e.g., linked) if necessary, and compiled or interpreted (e.g., into a library, stand-alone executable etc.) at a local machine, and executed by the local machine.

The instructions 1124 may be further transmitted or received over a communications network 1126 using a transmission medium via the network interface device 1120 utilizing any one of a number of transfer protocols (e.g., frame relay, internet protocol (IP), transmission control protocol (TCP), user datagram protocol (UDP), hypertext transfer protocol (HTTP), etc.). Example communication networks (e.g., 304, see FIG. 3) may include a local area network (LAN), a wide area network (WAN), a packet data network (e.g., the Internet), LoRa/LoRaWAN, or satellite communication networks, mobile telephone networks (e.g., cellular networks such as those complying with 3G, 4G LTE/LTE-A, or 5G standards), Plain Old Telephone (POTS) networks, and wireless data networks (e.g., Institute of Electrical and Electronics Engineers (IEEE) 802.11 family of standards known as Wi-Fi^{®}, IEEE 802.15.4 family of standards, peer-to-peer (P2P) networks, among others. In an example, the network interface device 1120 may include one or more physical jacks (e.g., Ethernet, coaxial, or phone jacks) or one or more antennas to connect to the communications network 1126. In an example, the network interface device 1120 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding or carrying instructions for execution by the machine 1100, and includes digital or analog communications signals or other intangible medium to facilitate communication of such software. A transmission medium is a machine-readable medium.

The following non-limiting examples detail certain aspects of the present subject matter that solve the challenges and provide the benefits discussed herein, among other things.

Example 1 is an agricultural assembly, comprising: an agricultural vehicle including: one or more existing actuators configured to operate systems of the agricultural assembly; and one or more existing sensors configured to monitor one or more one or more initial operating parameters of the agricultural assembly; an agricultural implement coupled with the agricultural vehicle, the agricultural implement configured to perform an agricultural operation; an existing agricultural controller in communication with the agricultural vehicle and the agricultural implement, wherein: the one or more existing sensors and the existing agricultural controller configured to detect one or more initial agricultural characteristics; and the existing agricultural controller and the one or more existing actuators configured to control one or more initial agricultural assembly functions; and a refinement controller configured to expand sensing and functional capabilities of the existing agricultural controller, wherein: the one or more existing sensors, the existing agricultural controller, and the refinement controller are configured to detect one or more expanded agricultural assembly characteristics different than the one or more initial agricultural characteristics; and the existing agricultural controller, the refinement controller, and the one or more existing actuators are configured to control one or more expanded agricultural functions.

In Example 2, the subject matter of Example 1 optionally includes wherein the refinement controller is configured to select an expanded agricultural assembly characteristic profile to detect the one or more expanded agricultural assembly characteristics.

In Example 3, the subject matter of any one or more of Examples 1-2 optionally include wherein the refinement controller is configured to select an expanded agricultural assembly function profile to control the one or more expanded agricultural functions.

In Example 4, the subject matter of any one or more of Examples 1-3 optionally include wherein the refinement controller is configured to initiate a calibration routine for any of the one or more existing sensors upon detection of one or more expanded agricultural assembly characteristics.

In Example 5, the subject matter of any one or more of Examples 1-4 optionally include wherein the one or more existing sensors, the existing agricultural controller, and the refinement controller are configured to monitor a status of the agricultural implement, including at least one of: a connection status, an operational status, a wear status, or a damage status.

In Example 6, the subject matter of any one or more of Examples 1-5 optionally include wherein the existing agricultural controller and the refinement controller are further configured to initiate an alert to an operator interface upon detection of one or more expanded agricultural assembly characteristics.

In Example 7, the subject matter of any one or more of Examples 1-6 optionally include wherein the existing agricultural controller and the refinement controller are configured to automatically adjust operation parameters of the agricultural assembly upon detection of one or more expanded agricultural assembly characteristics, and wherein the operation parameters include one or more of agricultural vehicle speed, agricultural steering, implement speed, implement height, or implement power.

In Example 8, the subject matter of any one or more of Examples 1-7 optionally include wherein the existing agricultural controller and the refinement controller are configured to control the agricultural implement to compensate for detected wear, damage, or misalignment of the implement indicated by the one or more expanded agricultural assembly characteristics.

In Example 9, the subject matter of any one or more of Examples 1-8 optionally include wherein the existing agricultural controller and the refinement controller are configured to modify a navigation plan of the agricultural assembly upon detection of one or more expanded agricultural assembly characteristics.

In Example 10, the subject matter of any one or more of Examples 1-9 optionally include wherein the existing agricultural controller and the refinement controller are configured to provide predictive maintenance alerts for the agricultural assembly upon detection of one or more expanded agricultural assembly characteristics.

In Example 11, the subject matter of any one or more of Examples 1-10 optionally include wherein the existing agricultural controller and the refinement controller are configured to detect unintended detachment of the agricultural implement upon detection of one or more expanded agricultural assembly characteristics.

In Example 12, the subject matter of any one or more of Examples 1-11 optionally include wherein the existing agricultural controller and the refinement controller are configured to interface with a fleet management system to provide status updates and receive operational commands for the agricultural implement.

Example 13 is a refinement controller comprising: a sensor interface configured for interconnection with one or more existing sensors of an agricultural assembly; an actuator interface configured for connection to one or more existing actuators of the agricultural assembly; and a refinement controller configured to expand sensing and functional capabilities of an existing agricultural controller, wherein: the one or more existing sensors, existing agricultural controller, and the refinement controller are configured to detect one or more expanded agricultural assembly characteristics; and the existing agricultural controller, refinement controller, and the one or more existing actuators are configured to control one or more expanded agricultural functions.

In Example 14, the subject matter of Example 13 optionally includes wherein the one or more existing sensors are configured to monitor one or more initial agricultural characteristics of the agricultural assembly, wherein the one or more initial agricultural characteristics of the agricultural assembly are different than the one or more expanded agricultural assembly characteristics.

In Example 15, the subject matter of any one or more of Examples 13-14 optionally include wherein the one or more existing actuators configured to control one or more existing actuators configured to operate one or more initial agricultural assembly functions.

In Example 16, the subject matter of any one or more of Examples 13-15 optionally include wherein the agricultural assembly includes one or more of an agricultural vehicle or an agricultural implement.

In Example 17, the subject matter of Example 16 optionally includes wherein the agricultural vehicle includes one or more of a tractor, combine, truck, or prime mover, and wherein the agricultural implement includes one or more of a planter, seeder, sprayer boom, cultivator, tillage implement, spreader, harvester head, mower, swather, or grain cart.

In Example 18, the subject matter of any one or more of Examples 13-17 optionally include wherein the refinement controller is configured to select an expanded agricultural assembly characteristic profile to detect the one or more expanded agricultural assembly characteristics.

In Example 19, the subject matter of any one or more of Examples 13-18 optionally include wherein the refinement controller is configured to select an expanded agricultural assembly function profile to control the one or more expanded agricultural functions.

In Example 20, the subject matter of any one or more of Examples 13-19 optionally include wherein the refinement controller is configured to initiate a calibration routine for any of the one or more existing sensors upon detection of one or more expanded agricultural assembly characteristics.

In Example 21, the subject matter of any one or more of Examples 13-20 optionally include wherein the one or more existing sensors, the existing agricultural controller, and the refinement controller are configured to monitor a status of the agricultural implement, including at least one of: a connection status, an operational status, a wear status, or a damage status.

In Example 22, the subject matter of any one or more of Examples 13-21 optionally include wherein the existing agricultural controller and the refinement controller are further configured to initiate an alert to an operator interface upon detection of one or more expanded agricultural assembly characteristics.

In Example 23, the subject matter of any one or more of Examples 13-22 optionally include wherein the existing agricultural controller and the refinement controller are configured to automatically adjust operation parameters of the agricultural assembly upon detection of one or more expanded agricultural assembly characteristics, and wherein the operation parameters include one or more of agricultural vehicle speed, agricultural steering, implement speed, implement height, or implement power.

In Example 24, the subject matter of any one or more of Examples 13-23 optionally include wherein the existing agricultural controller and the refinement controller are configured to control the agricultural implement to compensate for detected wear, damage, or misalignment of the implement indicated by the one or more expanded agricultural assembly characteristics.

In Example 25, the subject matter of any one or more of Examples 13-24 optionally include wherein the existing agricultural controller and the refinement controller are configured to modify a navigation plan of the agricultural assembly upon detection of one or more expanded agricultural assembly characteristics.

In Example 26, the subject matter of any one or more of Examples 13-25 optionally include wherein the existing agricultural controller and the refinement controller are configured to provide predictive maintenance alerts for the agricultural assembly upon detection of one or more expanded agricultural assembly characteristics.

In Example 27, the subject matter of any one or more of Examples 13-26 optionally include wherein the existing agricultural controller and the refinement controller are configured to detect unintended detachment of the agricultural implement upon detection of one or more expanded agricultural assembly characteristics.

In Example 28, the subject matter of any one or more of Examples 13-27 optionally include wherein the existing agricultural controller and the refinement controller are configured to interface with a fleet management system to provide status updates and receive operational commands for the agricultural implement.

Example 29 is a method for expanding sensing and functional characteristics of an existing agricultural system of an agricultural assembly, the method comprising: detecting, with one or more existing sensors and an existing agricultural controller, one or more initial agricultural characteristics of the agricultural assembly; controlling, with one or more existing actuators and the existing agricultural controller, one or more initial agricultural assembly functions; detecting, with the one or more existing sensors, the existing agricultural controller, and a refinement controller, one or more expanded agricultural assembly characteristics; and controlling, with the one or more existing actuators, the existing agricultural controller, and the refinement controller, one or more expanded agricultural functions.

In Example 30, the subject matter of Example 29 optionally includes wherein the agricultural assembly comprises one or more of an agricultural vehicle or an agricultural implement.

In Example 31, the subject matter of Example 30 optionally includes determining, with the one or more sensors, the existing agricultural controller, and the refinement controller, a status of the agricultural implement.

In Example 32, the subject matter of Example 31 optionally includes wherein the status of the agricultural implement includes at least one of: a connection status, an operational status, a wear status, or a damage status.

In Example 33, the subject matter of any one or more of Examples 30-32 optionally include wherein the agricultural vehicle includes one or more of a tractor, combine, truck, or prime mover, and wherein the agricultural implement includes one or more of a planter, seeder, sprayer boom, cultivator, tillage implement, spreader, harvester head, mower, swather, or grain cart.

In Example 34, the subject matter of any one or more of Examples 30-33 optionally include adjusting, with the refinement controller and the existing agricultural controller, one or more operating parameters based on the one or more expanded agricultural assembly characteristics.

In Example 35, the subject matter of Example 34 optionally includes wherein the one or more operating parameters include one or more of agricultural vehicle speed, agricultural steering, implement speed, implement height, or implement power.

In Example 36, the subject matter of any one or more of Examples 29-35 optionally include wherein the one or more expanded agricultural functions are based on the one or more expanded agricultural assembly characteristics.

In Example 37, the subject matter of any one or more of Examples 29-36 optionally include wherein detecting, with the one or more existing sensors, the existing agricultural controller, and a refinement controller, one or more expanded agricultural assembly characteristics comprises: selecting an expanded agricultural assembly characteristic profile.

In Example 38, the subject matter of any one or more of Examples 29-37 optionally include wherein controlling, with the one or more existing actuators, the existing agricultural controller, and the refinement controller, one or more expanded agricultural functions comprises: selecting an expanded agricultural assembly function profile.

In Example 39, the subject matter of any one or more of Examples 29-38 optionally include wherein detecting, with the one or more existing sensors, the existing agricultural controller, and a refinement controller, one or more expanded agricultural assembly characteristics, comprises: initiating, with the existing agricultural controller and the refinement controller, a calibration routine for any of the one or more existing sensors.

Example 40 includes a system, apparatus, or method including any element of any of Examples 1-39.

The above-detailed description includes references to the accompanying drawings, which form a part of the detailed description. The drawings show, by way of illustration, specific examples that may be practiced. These embodiments are also referred to herein as "examples." Such examples may include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

All publications, patents, and patent documents referred to in this document are incorporated by reference herein in their entirety, as though individually incorporated by reference. In the event of inconsistent usages between this document and those documents so incorporated by reference, the usage in the incorporated reference(s) should be considered supplementary to that of this document; for irreconcilable inconsistencies, the usage in this document controls.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

The term "about," as used herein, means approximately, in the region of, roughly, or around. When the term "about" is used in conjunction with a numerical range, it modifies that range by extending the boundaries above and below the numerical values set forth. In general, the term "about" is used herein to modify a numerical value above and below the stated value by a variance of 10%. In one aspect, the term "about" means plus or minus 10% of the numerical value of the number with which it is being used. Therefore, about 50% means in the range of 45%-55%. Numerical ranges recited herein by endpoints include all numbers and fractions subsumed within that range (e.g., 1 to 5 includes 1, 1.5, 2, 2.75, 3, 3.90, 4, 4.24, and 5). Similarly, numerical ranges recited herein by endpoints include subranges subsumed within that range (e.g., 1 to 5 includes 1-1.5, 1.5-2, 2-2.75, 2.75-3, 3-3.90, 3.90-4, 4-4.24, 4.24-5, 2-5, 3-5, 1-4, and 2-4). It is also to be understood that all numbers and fractions thereof are presumed to be modified by the term "about."

The above description is intended to be illustrative, and not restrictive. For example, the above-described examples (or one or more aspects thereof) may be used in combination with each other. Other examples may be used, such as by one of ordinary skill in the art upon reviewing the above description. The Abstract is to allow the reader to quickly ascertain the nature of the technical disclosure and is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description, with each claim standing on its own as a separate embodiment. The scope of the examples should be determined with reference to the appended claims, along with the full scope of equivalents to which such claims are entitled.

## Claims

1. An agricultural assembly, comprising:
an agricultural vehicle including:
one or more existing actuators configured to operate systems of the agricultural assembly; and
one or more existing sensors configured to monitor one or more one or more initial operating parameters of the agricultural assembly;
an agricultural implement coupled with the agricultural vehicle, the agricultural implement configured to perform an agricultural operation;
an existing agricultural controller in communication with the agricultural vehicle and the agricultural implement, wherein:
the one or more existing sensors and the existing agricultural controller configured to detect one or more initial agricultural characteristics; and
the existing agricultural controller and the one or more existing actuators configured to control one or more initial agricultural assembly functions; and
a refinement controller configured to expand sensing and functional capabilities of the existing agricultural controller, wherein:
the one or more existing sensors, the existing agricultural controller, and the refinement controller are configured to detect one or more expanded agricultural assembly characteristics different than the one or more initial agricultural characteristics; and
the existing agricultural controller, the refinement controller, and the one or more existing actuators are configured to control one or more expanded agricultural functions.

2. The agricultural assembly of claim 1, wherein the refinement controller is configured to select an expanded agricultural assembly characteristic profile to complete at least one of:
detect the one or more expanded agricultural assembly characteristics;
control the one or more expanded agricultural functions; or
initiate a calibration routine for any of the one or more existing sensors upon detection of one or more expanded agricultural assembly characteristics.

3. The agricultural assembly of any of claims 1-2, wherein the one or more existing sensors, the existing agricultural controller, and the refinement controller are configured to monitor a status of the agricultural implement, including at least one of: a connection status, an operational status, a wear status, or a damage status.

4. The agricultural assembly of any of claims 1-3, wherein the existing agricultural controller and the refinement controller are configured to control the agricultural implement to compensate for detected wear, damage, or misalignment of the implement indicated by the one or more expanded agricultural assembly characteristics.

5. The agricultural assembly of any of claims 1-4, wherein the existing agricultural controller and the refinement controller are configured to:
provide predictive maintenance alerts for the agricultural assembly upon detection of one or more expanded agricultural assembly characteristics.

6. The agricultural assembly of any of claims 1-5, wherein the existing agricultural controller and the refinement controller are configured to:
detect unintended detachment of the agricultural implement upon detection of one or more expanded agricultural assembly characteristics.

7. The agricultural assembly of any of claims 1-6, wherein the one or more existing actuators are configured to operate one or more initial agricultural assembly functions, and wherein the one or more expanded agricultural functions include additional functions beyond the one or more initial agricultural assembly functions.

8. The agricultural assembly of any of claims 1-7, wherein the agricultural vehicle includes one or more of a tractor, combine, truck, or prime mover, and wherein the agricultural implement includes one or more of a planter, seeder, sprayer boom, cultivator, tillage implement, spreader, harvester head, mower, swather, auxiliary water tanks, weights or grain cart.

9. The agricultural assembly of any of claims 1-8, wherein the refinement controller is configured to select an expanded agricultural assembly characteristic profile to complete at least one of:
detect the one or more expanded agricultural assembly characteristics;
select an expanded agricultural assembly function profile to control the one or more expanded agricultural functions;
initiate a calibration routine for any of the one or more existing sensors upon detection of one or more expanded agricultural assembly characteristics; or
initiate an alert to an operator interface upon detection of one or more expanded agricultural assembly characteristics.

10. The agricultural assembly of any of claims 1-9, wherein the existing agricultural controller and the refinement controller are configured to automatically adjust operation parameters of the agricultural assembly upon detection of one or more expanded agricultural assembly characteristics, and wherein the operation parameters include one or more of agricultural vehicle speed, perception system, agricultural steering, implement speed, implement height, or implement power.

11. A method for expanding sensing and functional characteristics of an existing agricultural system of an agricultural assembly, the method comprising:
detecting, with one or more existing sensors and an existing agricultural controller, one or more initial agricultural characteristics of the agricultural assembly;
controlling, with one or more existing actuators and the existing agricultural controller, one or more initial agricultural assembly functions;
detecting, with the one or more existing sensors, the existing agricultural controller, and a refinement controller, one or more expanded agricultural assembly characteristics; and
controlling, with the one or more existing actuators, the existing agricultural controller, and the refinement controller, one or more expanded agricultural functions.

12. The method of claim 11, wherein the agricultural assembly comprises one or more of an agricultural vehicle or an agricultural implement.

13. The method of claim 12, comprising:
determining, with the one or more sensors, the existing agricultural controller, and the refinement controller, a status of the agricultural implement.

14. The method of any of claims 12-13, comprising:
adjusting, with the refinement controller and the existing agricultural controller, one or more operating parameters based on the one or more expanded agricultural assembly characteristics.

15. The method of any of claims 11-14, wherein detecting, with the one or more existing sensors, the existing agricultural controller, and a refinement controller, one or more expanded agricultural assembly characteristics comprises:
selecting an expanded agricultural assembly characteristic profile.
